# EUROPÄISCHE PATENTSCHRIFT

(11) **EP 1 559 641 B1**
(45) Veröffentlichungstag und Bekanntmachung des Hinweises auf die Patenterteilung: **14.03.2007**
(21) Anmeldenummer: 04024900.5
(22) Anmeldetag: 20.10.2004
(51) Int. Cl.: B62D 35/00

(54) **Kraftfahrzeug mit einer Luftleiteinrichtung**
Vehicle with spoiler
Véhicule automobile avec un dispositif de guidage d'air

(30) Priorität: 29.01.2004 DE 102004004360
(43) Veröffentlichungstag der Anmeldung: 03.08.2005
(73) Patentinhaber: Dr.Ing. h.c.F. Porsche Aktiengesellschaft, 70435 Stuttgart (DE)
(72) Erfinder: Rinklin, Gerhard, 75233 Tiefenbronn (DE)

(56) Entgegenhaltungen:
- EP-A- 0 882 642
- DE-A1- 2 851 639
- FR-A- 2 816 905
- JP-A- 2 006 281

## Beschreibung

Bei der Erfindung wird ausgegangen von einem Kraftfahrzeug mit einer Luftleiteinrichtung, gemäß Oberbegriff des Anspruchs 1. Eine solche Einrichtung wird in der gattungsgemäßen EP 0882642 offenbart.

Aus der DE 44 27 196 A1 ist ein Kraftfahrzeug bekannt, welches eine Heckklappe, ein Heckverkleidungsteil und eine heckseitige Luftleiteinrichtung aufweist, die über eine Antriebseinrichtung aus einer eingefahrenen Ruhestellung in eine ausgefahrene, angehobene Wirkstellung und umgekehrt verlagerbar ist. Die Luftleiteinrichtung erstreckt sich entlang der Fahrzeugbreite und schließt sich unmittelbar an eine hintere, in Fahrzeugquerrichtung verlaufende Querkante der Heckklappe an. Unterhalb der Luftleiteinrichtung erstreckt sich ein Fortsatz, der von dem Heckverkleidungsteil in Richtung zur Heckklappe ausgeht. Dieser Fortsatz endet unterhalb der Luftleiteinrichtung mit Abstand zur Querkante der Heckklappe. Die Luftleiteinrichtung selbst ist bei dem bekannten Kraftfahrzeug als sog. Abrisskante ausgeführt, die an der Oberseite ein flügelähnliches Profil aufweist und an der Vorderseite mit einer durchgehenden, sich entlang der Fahrzeugbreite erstreckenden Wand ausgebildet ist. Somit wird eine über die Heckklappe geleitete Luftströmung über die Abrisskante bzw. die Flügeloberseite geleitet.

Aus der DE 197 41 321 A1 ist ferner eine auf eine Heckklappe aufgesetzte Luftleiteinrichtung für ein Kraftfahrzeug bekannt, die als sog. Spaltflügel ausgeführt ist und einen beweglichen Heckflügel sowie einen feststehenden Heckspoiler aufweist.

Aufgabe der Erfindung ist es, ein Kraftfahrzeug anzugeben, bei dem die Luftleiteinrichtung optimiert angeordnet ist.

Gelöst wird diese Aufgabe mit einem Kraftfahrzeug, welches die in Anspruch 1 genannten Merkmale umfasst. Weitere, die Erfindung ausgestaltende Merkmale sind in den Unteransprüchen enthalten.

Die mit der Erfindung hauptsächlich erzielten Vorteile sind darin zu sehen, dass mit der Anordnung eines Spaltflügels grundsätzlich die aerodynamischen Eigenschaften des Kraftfahrzeugs im Heckbereich gegenüber einer als Abrisskante ausgeführten Luftleiteinrichtung optimiert sind. Durch die Anordnung des Spaltflügels im Bereich des Heckverkleidungsteils überragt die Luftleiteinrichtung in ihrer eingefahrenen Ruhestellung zwar die Außenhaut im Bereich der Heckklappe und des Heckverkleidungsteils, jedoch nicht so deutlich, wie dies im Stand der Technik bei dem bekannten Spaltflügel auf der Heckklappe gegeben ist. Daraus ergeben sich beispielsweise Vorteile bei der Nutzung von automatischen Fahrzeugwaschanlagen. Ferner ist vorteilhaft, dass durch die Anordnung der Luftleiteinrichtung am Heckverkleidungsteil das Gewicht der Heckklappe reduziert ist, so dass sich ein einfacheres Öffnen der Heckklappe ergibt. Insbesondere bei Kraftfahrzeugen, die mit einem Gepäckraum unterhalb der Heckklappe ausgestattet sind, ist dies von Vorteil, da der Fahrzeugnutzer die Heckklappe durch das geringere Gewicht leichter öffnen kann.

Mit den in Anspruch 2 genannten Merkmalen wird in vorteilhafter Weise eine günstige Anströmung des Heckspoilers erreicht, da die anströmende Luft während der Fahrt des Fahrzeugs entlang des Grundes der Mulde bis zum Heckspoiler geleitet wird.

Mit den in Anspruch 3 genannten Merkmalen wird ein Absenken des Heckflügels in eine sehr tiefe Position ermöglicht, so dass eine besonders günstige aerodynamische Kontur in der eingefahrenen Ruhestellung im Übergangsbereich zwischen Querkante der Heckklappe und Heckflügel erreicht wird.

In besonders bevorzugter Ausführungsform wird - entsprechend Anspruch 5 - der Grund der Mulde mit einer Abstützstruktur versehen. Da insbesondere in Wirkstellung des Heckflügels und bei höheren Fahrzeuggeschwindigkeiten durch die Luftströmung deutliche Kräfte an dem Grund wirken, wird durch die Abstützstruktur ein Widerlager für diese von der Luftströmung hervorgerufenen Kräfte bereit gestellt, so dass der Grund der Mulde bei Fahrt mit höherer Geschwindigkeit nicht unkontrolliert in der Luftströmung schwingt bzw. sich bewegt.

Für eine einfache Befestigung der Abstützstruktur, die hinsichtlich der Montage deutliche Vorteile liefert, wird insbesondere eine Verbindung mit den in Anspruch 8 bzw. 9 genannten Merkmalen bevorzugt. In Weiterbildung der Erfindung mit den in Anspruch 10 genannten Merkmalen wird eine gesicherte Befestigung des Abstützelements erreicht.

Um die Wirkung der Abstützstruktur weiter zu optimieren, wird entsprechend einer Ausführungsform gemäß Anspruch 12 bzw. 13 eine karosserieseitige Abstützung der Abstützstruktur vorgeschlagen.

In besonders bevorzugter Ausführungsform wird mit den in Anspruch 14 oder 15 angegebenen Merkmalen die eigentliche Funktion des Heckverkleidungsteils erweitert, wenn die Mulde und der Heckspoiler einstückig mit dem Heckverkleidungsteil ausgeführt sind, wobei die Mulde gemäß einer Weiterbildung mit den in Anspruch 16 genannten Merkmalen hinsichtlich ihrer Steifigkeit verbessert ist.

Die Erfindung wird nachfolgend anhand von Ausführungsbeispielen mit Bezug auf die Zeichnung näher erläutert. Es zeigen:
- Fig. 1: teilweise ein Kraftfahrzeug mit einer Heckklappe, einem Heckverkleidungsteil und einer Luftleiteinrichtung in einem Längsschnitt,
- Fig. 2: ausschnittweise in perspektivischer Ansicht das Heckverkleidungsteil mit einem Heckspoiler der Luftleiteinrichtung,
- Fig. 3: in perspektivischer Ansicht die von der Außenhaut abgewandte Innenseite des Heckverkleidungsteils gemäß Fig. 2 und
- Fig. 4: einen Schnitt durch die Luftleiteinrichtung und das Heckverkleidungsteil entsprechend einer Linie IV - IV in Fig. 2.

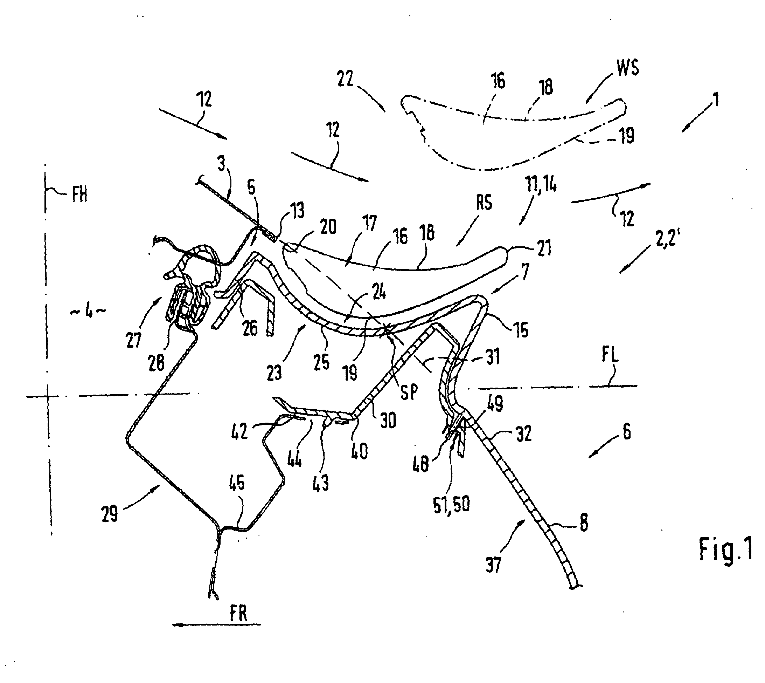

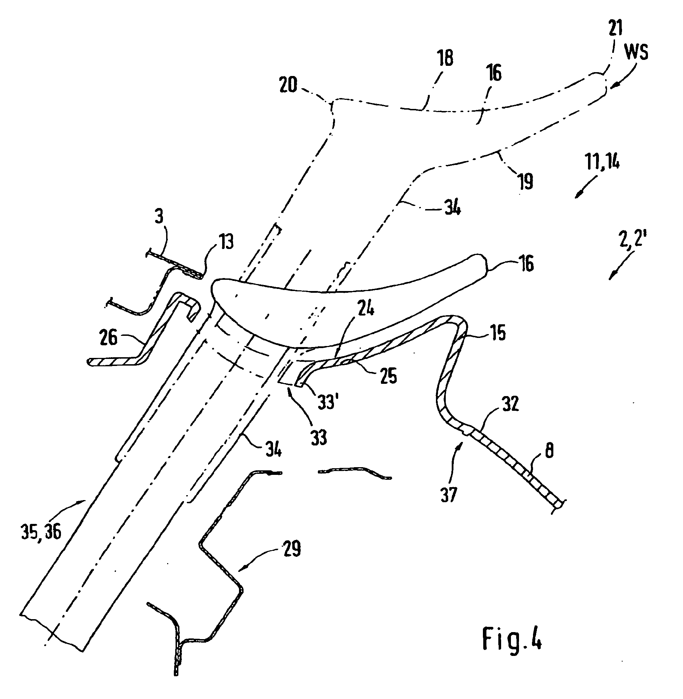

In den Fig. 1 und 4 ist von einem teilweise dargestellten Kraftfahrzeug 1 in einem Längsschnitt, also mit einer Schnittebene parallel zur Fahrzeuglängsachse FL, ausschnittweise eine Heckpartie 2 einer Karosserie 2' des Kraftfahrzeugs 1 zu sehen. Die Heckpartie 2 umfasst eine Heckklappe 3, die einen darunter liegenden Fahrzeugraum 4, insbesondere Gepäckraum oder Motorraum, abdeckt oder freigibt, in dem die Heckklappe 3 eine zugeordnete Karosserieöffnung 5 verschließt oder freigibt. Die Heckpartie 2 besitzt ferner ein Heckverkleidungsteil 6, das einen oberen, entlang der Fahrzeugbreite FB und etwa in Richtung der Fahrzeuglängsachse FL verlaufenden Randstreifen 7 und eine von dem Randstreifen 7 ausgehende, sich nach unten etwa in Richtung der Fahrzeughochachse FH fortsetzende Schürze 8 aufweist, die mit einem Kennzeichenbefestigungsfeld 9 ausgestattet sein kann. Das Heckverkleidungsteil 6 weist ferner jeweils neben dem Randstreifen 7 seitliche Ausschnitte 10 auf, in die hier nicht dargestellte Heckleuchten einsetzbar sind. Der Randstreifen 7 erstreckt sich somit zwischen den beiden Ausnehmungen 10 für die Heckleuchten. Am Randstreifen 7 ist der Heckpartie 2 eine heckseitige Luftleiteinrichtung 11 zugeordnet, die eine Ruhestellung RS und eine in den Fig. 1 und 4 strichpunktiert eingezeichnete Wirkstellung WS einnehmen kann. Die Luftleiteinrichtung 11 erstreckt sich entlang der Fahrzeugbreite FB bzw. in Richtung der Fahrzeugquerachse FQ und ist - in Fahrtrichtung FR für Vorwärtsfahrt - hinter der Heckklappe 3 angeordnet, so dass sich während der Fahrt des Kraftfahrzeugs 1 in Fahrtrichtung FR eine Luftströmung gemäß Pfeil 12 einstellt, die im folgenden als Luftströmungsrichtung 12 bezeichnet wird. Aus Fig. 1 ist ersichtlich, dass sich die Luftleiteinrichtung 11 an eine hintere, in Fahrzeugquerrichtung FQ, also entlang der Fahrzeugbreite FB, erstreckende Querkante 13 der Heckklappe 3 anschließt.

Die Luftleiteinrichtung 11 ist als Spaltflügelanordnung 14 zweiteilig ausgeführt und besitzt somit einen sich entlang der Fahrzeugbreite FB erstreckenden, feststehenden Heckspoiler 15 und einen beweglichen Heckflügel 16, der oberhalb des Heckspoilers 15 angeordnet ist und sich ebenfalls entlang der Fahrzeugbreite FB mit einem Flügelprofil 17 erstreckt, welches eine Oberseite 18 und eine Unterseite 19 aufweist, wobei die Unterseite 19 dem Heckspoiler 15 zugewandt ist. Ober- und Unterseite 18 und 19 des Flügelprofils 17 laufen an einer Vorderkante 20 und an einer Hinterkante 21 des Flügelprofils 17 zusammen, wobei die Vorderkante 20 benachbart zu Querkante 13 zu liegen kommt, wenn der Heckflügel 16 in seiner eingefahrenen Ruhestellung RS vorliegt. In ausgefahrener Wirkstellung WS des Heckflügels 16 wird zwischen der Unterseite 19 des Flügelprofils 17 und dem Heckverkleidungsteil 6 ein Spalt 22 gebildet, den die Luft während der Fahrt des Fahrzeugs in Luftströmungsrichtung 12 passiert. Die aerodynamische Wirkung einer Spaltflügelanordnung ist aus der DE 197 41 321 A1 bekannt, so dass hierauf nicht näher eingegangen wird.

Der Randstreifen 7 des Heckverkleidungsteils 6 stellt einen nach vorn, also in Fahrtrichtung FR, gerichteten Fortsatz 23 dar, der einerseits den feststehenden Heckspoiler 15 als Erhebung umfasst und der sich andererseits eine schalenförmige Mulde 24 bildend bis unter die Querkante 13 der Heckklappe 3 erstreckt. In Fahrtrichtung FR ist die Mulde 24 dem Heckspoiler 15 vorgeordnet und geht vorzugsweise mit ihrem Muldengrund 25 übergangslos in das Profil des Heckspoilers 15 über. Der Grund 25 der Mulde 24 verläuft dabei unterhalb der Querkante 13, so dass der Heckflügel 16 in seiner eingefahrenen Ruhestellung RS zumindest mit seiner Vorderkante 20 bezüglich seiner Höhe mit seiner Vorderkante mit der Querkante 13 abschließt. Eine von dem gewölbten Muldengrund 25 ausgehende Erweiterung 26 unterhalb der Heckklappe 3 erstreckt sich bis zu einer Dichtung 27, die die Klappenöffnung 5 vorzugsweise umlaufend umgibt. Die Dichtung 27 ist auf einen Flansch 28 eines Rohbaus 29 des Kraftfahrzeugs 1 aufgesetzt, an welchem Rohbau 29 überdies das Heckverkleidungsteil 6 befestigt und im ferner der Randstreifen 7 über eine Abstützstruktur 30 abgestützt ist.

In Fig. 1 ist zwischen der Querkante 13 der Heckklappe 3 und der Schürze 8 gestrichelt eine Linie 31 eingezeichnet, die als gedachte Fortsetzung den Verlauf der Außenhaut bzw. deren Niveau zwischen der Querkante 13 und der Schürze 8 widerspiegelt. Die Mulde 25 liegt unterhalb der Linie 31 bzw. unterhalb des Niveau der Außenhaut 32 und unterhalb der Querkante 13. Der Heckspoiler 15 überragt die Außenhaut 32 und die Querkante 13 der Heckklappe, zumindest in Bezug auf die Linie 31. Durch die Linie 31 wird überdies die Mulde 24 definiert, und ferner wird ersichtlich, dass der Grund 25 der Mulde 24 übergangslos in den als Erhebung auf der Linie 31 ausgebildeten Heckspoiler übergeht. Demnach liegt vor einem Schnittpunkt SP der Linie 31 mit dem Grund 25 die Mulde 24 und dahinter der Heckspoiler 15. In Wirkstellung WS liegt der Heckflügel 16 oberhalb der Linie 31 und - in Richtung der Fahrzeughochachse FH gesehen mit Abstand dazu.

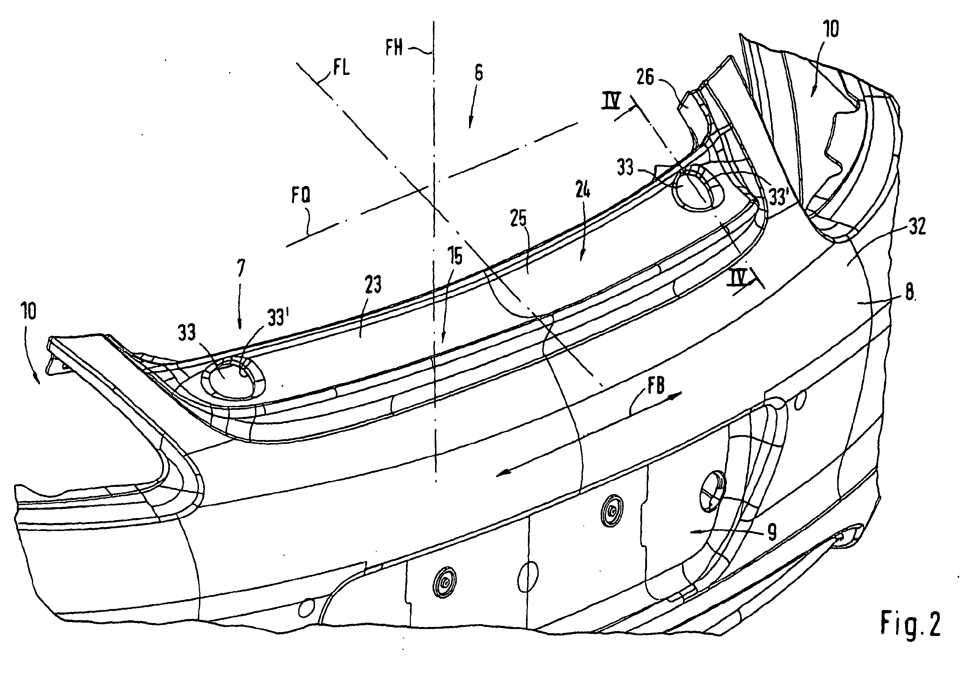

Entsprechend Fig. 2 ist das Heckverkleidungsteil 6 jeweils seitlich endseitig an seinem Randstreifen 7 mit zumindest einem Durchbruch 33 versehen, durch die hindurch als Säulen 34 realisierte Stützen für den Heckflügel 16 treten, wie dies überdies in Fig. 4 zu sehen ist. Diese Säulen 34 sind jeweils mit einem Aussteller 35 verbunden, der Bestandteil einer hier nicht weiter dargestellten Antriebseinrichtung 36 für die Luftleiteinrichtung 11 ist, um den Heckflügel 16 aus seiner eingefahrenen Ruhestellung RS in die in den Fig. 1 und 4 strichpunktiert eingezeichnete Wirkstellung WS und umgekehrt, insbesondere automatisch, beispielsweise geschwindigkeitsabhängig oder ggf. auch manuell, Aus- und Einfahren zu können. Die Antriebseinrichtung 36 kann am Rohbau 29 und/oder an dem Heckverkleidungsteil 6 befestigt sein. Der bzw. die Durchbrüche 33 können mit einer Abstellung bzw. einem abstehendem Kragen 33', insbesondere Ringkragen, versehen sein, der an einer Innenseite 37 des Heckverkleidungsteils 6 nach innen abstehend angeordnet sowie vorzugsweise einstückig mit dem Heckverkleidungsteil 6 ausgeführt ist und die Steifigkeit des Randstreifens 7 bzw. der Mulde 24 verbessert.

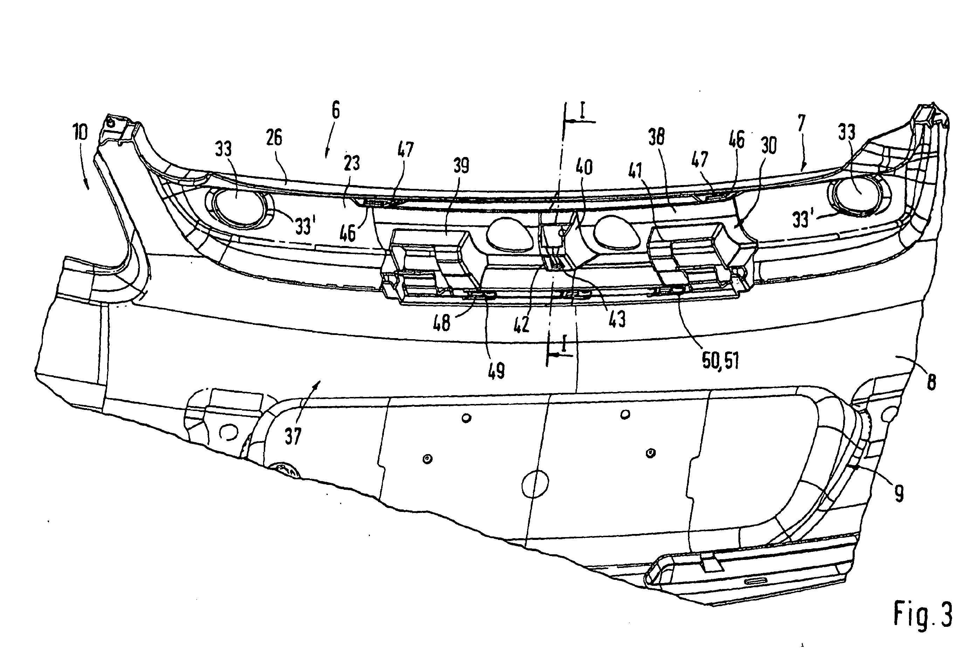

Im folgenden wird die in Fig. 1 gezeigte Abstützstruktur 30 für den Grund 25 der Mulde 24 anhand der Fig. 1 und 3 näher erläutert. Fig. 1 zeigt einen Schnitt entlang der Linie I - I in Fig. 3, wobei in Fig. 3 der Heckflügel 16 nicht eingezeichnet ist. Die Abstützstruktur 30 ist unterhalb des Grundes 25 der Mulde angeordnet und stützt diese gegenüber dem Rohbau 29 ab. Dafür ist die Abstützstruktur 30 an der in Fig. 3 zu sehenden Innenseite 37 des Heckverkleidungsteils 6 angeordnet, welche Innenseite 37 der Außenseite, also der Außenhaut 32 gegenüberliegend angeordnet ist.

Die Abstützstruktur 30 besitzt eine Stützschale 38, die der Kontur des Grundes 25 der Mulde 24 an der Innenseite 37 folgt. An dieser Stützschale 38 sind ein oder mehrere davon abstehende Stützfüße 39, 40, 41 angeordnet, insbesondere einstückig mit der Stützschale 38 realisiert, welche Stützfüße 39, 40, 41 sich am Rohbau 29 abstützen. Der mittlere Stützfuß 40 weist an seinem Fußende 42 einen Vorsprung 43 auf, der in eine entsprechende Aufnahme 44 am Rohbau 29 eingreift. Diese Aufnahme 44 kann als Durchbruch in einem Rohbaufortsatz 45 eingebracht sein, der als Lasche oder als durchgehender Flansch ausgeführt ist. An einem derartigen Rohbaufortsatz 45 können sich im Übrigen die beiden äußeren Stützfüße 39 und 41 abstützen.

Die Abstützstruktur 30 kann einstückig mit dem Heckverkleidungsteil 6 ausgeführt sein oder in bevorzugter Ausführungsform als separates Teil hergestellt und an dem Heckverkleidungsteil 6 im Bereich des Randstreifens 7 befestigt sein, worauf nachfolgend eingegangen wird. Von der Stützschale 38 geht endseitig, also der Erweiterung 26 zugewandt, von der Stützschale 38 zumindest eine Einhänglasche 46 aus, die in eine entsprechend am Randstreifen 7, insbesondere an der Erweiterung 26, vorgesehene Einhängöse 47 eingreift. Entlang der sich zwischen den Durchbrüchen 33 erstreckenden Stützschale 38 können ein oder mehrere dieser Einhänglaschen bzw. Einhängösen angeordnet sein. Im Ausführungsbeispiel gemäß Fig. 3 sind beabstandet zueinander zwei Einhänglaschen und Einhängösen 46 und 47 an der Abstützstruktur 30 bzw. an dem Heckverkleidungsteil 6 vorgesehen. Benachbart zum Heckspoiler 15 ist eine zusätzliche Befestigung der Abstützstruktur 30 an dem Heckverkleidungsteil 6 vorgesehen. Dafür geht von der Innenseite 37 des Heckverkleidungsteils 6 zumindest eine Stecklasche 48 aus, die eine an der Abstützstruktur 30 vorgesehene Durchgriffsöse 49 durchgreift. Um ein Abrutschen der Durchgriffsöse von der Stecklasche 48 zu verhindern ist ein Befestigungselement 50 vorgesehen, das im gezeigten Ausführungsbeispiel als auf die Stecklasche aufgesetzt Klammer 51 realisiert ist, die die Abstützstruktur 30 an der Innenseite 37 hält. Diese Klammer 51 kann als Blechklammer, insbesondere aus Federstahl, hergestellt sein. In der gezeigten Ausführungsform sind drei mit Abstand zueinander liegende Stecklaschen 48, entsprechende Durchgriffsösen 49 und Befestigungselement 50 vorgesehen.

Gemäß einem hier nicht gezeigten Ausführungsbeispiel wäre es denkbar, anstelle der vorstehend beschriebenen Befestigung der Abstützstruktur 30 an dem Randstreifen 7 die Abstützstruktur 30 an der Innenseite 37 im Bereich des Randstreifens unterhalb am Grund 25 andersartig, beispielsweise durch Klebung und/oder Verklipsung, zu befestigen. Da in bevorzugter Ausführungsform das Heckverkleidungsteil 6 mit seiner Schürze 8, seinem Randstreifen 7, der Mulde 24 und dem Heckspoiler 15 einstückig ausgeführt ist, wäre es jedoch auch denkbar, die Abstützstruktur 30 einstückig mit dem Heckverkleidungsteil 6 auszubilden, welches Heckverkleidungsteil 6 im Übrigen als Kunststoffteil hergestellt ist.

## Patentansprüche

1. Kraftfahrzeug (1) mit einer Heckklappe (3), einem Heckverkleidungsteil (6) und mit einer über eine Antriebseinrichtung (36) aus einer eingefahrenen Ruhestellung (RS) in eine ausgefahrene Wirkstellung (WS) und umgekehrt verlagerbaren, sich entlang der Fahrzeugbreite (FB) erstreckenden Luftleiteinrichtung (11), wobei die Luftleiteinrichtung (11) zweiteilig als Spaltflügelanordnung (14) mit einem in Ruhestellung (RS) und Wirkstellung (WS) verlagerbaren Heckflügel (16) und mit einem feststehenden, unterhalb des Heckflügels (16) liegenden Heckspoiler (15) ausgestattet ist, wobei der Heckspoiler (15) - in einem in Fahrzeuglängsrichtung (FL) verlaufenden Querschnitt gesehen - mit einem Fortsatz (23) eine schalenförmige Mulde (24) bildet, die außerdem entlang der Fahrzeugbreite (FB) verläuft und die den Heckflügel (16) in seiner Ruhestellung (RS) zumindest teilweise aufnimmt, **dadurch gekennzeichnet, dass** das Heckverkleidungsteil (6) den Fortsatz (23) aufweist, der sich unterhalb der Luftleiteinrichtung (11) in Richtung zur Querkante (13) der Heckklappe (3) erstreckt, dass der Fortsatz (23) des Heckverkleidungsteils (6) bis unter die Querkante (13) der Heckklappe (3) verläuft, dass sich die Luftleiteinrichtung (11) an die hintere, in Fahrzeugquerrichtung (FQ) verlaufende Querkante (13) der Heckklappe (3) anschließt, und dass der Heckspoiler (15) als sich entlang der Fahrzeugbreite (FB) verlaufende Erhebung auf dem Heckverkleidungsteil (6) ausgeführt ist.

2. Kraftfahrzeug nach Anspruch 1, **dadurch gekennzeichnet, dass** sich der Heckspoiler (15), vorzugsweise übergangslos, an den Grund (25) der Mulde (24) dahinter anschließt.

3. Kraftfahrzeug nach Anspruch 1 oder 2, **dadurch gekennzeichnet, dass** - im Längsschnitt gesehen - der Grund (25) der Mulde (24) benachbart zur Querkante (13) der Heckklappe (3) zumindest abschnittweise unterhalb der Querkante (13) liegt.

4. Kraftfahrzeug nach einem der vorhergehenden Ansprüche, **dadurch gekennzeichnet, dass** - im Längsschnitt gesehen - der Heckspoiler (15) die Querkante (13) der Heckklappe (3) überragt.

5. Kraftfahrzeug nach einem der vorhergehenden Ansprüche, **dadurch gekennzeichnet, dass** unterhalb des Grundes (25) der Mulde (24) eine Abstützstruktur (30) für den Grund (25) angeordnet ist.

6. Kraftfahrzeug nach Anspruch 5, **dadurch gekennzeichnet, dass** die Abstützstruktur (30) an einer Innenseite (37) des Heckverkleidungsteils (6) angeordnet ist.

7. Kraftfahrzeug nach Anspruch 5 oder 6, **dadurch gekennzeichnet, dass** die Abstützstruktur (30) eine Stützschale (38) aufweist, die - im Längsschnitt gesehen - an den Verlauf des Grundes (25) angepasst ist.

8. Kraftfahrzeug nach einem der vorhergehenden Ansprüche 5 bis 7, **dadurch gekennzeichnet, dass** die Abstützstruktur (30) zumindest eine Einhänglasche (46) aufweist, die in eine Einhängöse (47) am Heckverkleidungsteil (6) eingreift.

9. Kraftfahrzeug nach einem der vorhergehenden Ansprüche 5 bis 8, **dadurch gekennzeichnet, dass** die Abstützstruktur (30) zumindest eine Durchgriffsöse (49) aufweist, die von einer Stecklasche (48) des Heckverkleidungsteils (6) durchgriffen ist, und dass die Stecklasche (48) ein Befestigungselement (50) aufweist, welches die Abstützstruktur (30) an der Innenseite (37) des Heckverkleidungsteils (6) hält.

10. Kraftfahrzeug nach Anspruch 9, **dadurch gekennzeichnet, dass** das Befestigungselement (50) als auf die Stecklasche (48) aufsetzbare Klammer (51) ausgeführt ist.

11. Kraftfahrzeug nach einem der vorhergehenden Ansprüche 5 bis 10, **dadurch gekennzeichnet, dass** sich die Abstützstruktur (30) am Rohbau (29) des Kraftfahrzeugs (1) abstützt.

12. Kraftfahrzeug nach einem der vorhergehenden Ansprüche 5 bis 11, **dadurch gekennzeichnet, dass** die Abstützstruktur (30) wenigstens einen Stützfuß (39, 40, 41) aufweist, der am Rohbau (29) angreift

13. Kraftfahrzeug nach Anspruch 12, **dadurch gekennzeichnet, dass** der Stützfuß (39, 40, 41) einen Vorsprung (43) aufweist, der in eine entsprechende Aufnahme (44) am Rohbau (29) eingreift.

14. Kraftfahrzeug nach einem der vorhergehenden Ansprüche, **dadurch gekennzeichnet, dass** das Heckverkleidungsteil (6) mit dem Randstreifen (7), also der Mulde (24) und dem Heckspoiler (15), einstückig als Kunststoffteil ausgeführt ist.

15. Kraftfahrzeug nach einem der vorhergehenden Ansprüche, **dadurch gekennzeichnet, dass** in das Heckverkleidungsteil (6), insbesondere in einem Randstreifen (7) und vorzugsweise in dessen Mulde (24), zumindest eine Durchtrittsöffnung (33) für eine Antriebseinrichtung (36) für den Heckflügel (16) eingebracht ist.

16. Kraftfahrzeug nach Anspruch 15, **dadurch gekennzeichnet, dass** die Durchtrittsöffnung (33) mit einem Kragen (33') versehen ist.

17. Kraftfahrzeug nach Anspruch 1 oder 3, **dadurch gekennzeichnet, dass** die Mulde (24) zumindest abschnittweise unterhalb einer gedachten Fortsetzung (Linie 31) der Außenhaut (32) einer Karosserie (2') des Kraftfahrzeugs (1) liegt.

## Claims

1. A motor vehicle (1) with a tailgate (3), a rear panel part (6) and an air guiding device (11) which is displaceable by a drive device (36) from a retracted rest position (RS) into an extended operative position (WS) and vice versa and which extends along the vehicle width (FB), wherein the air guiding device (11) is constructed in two parts as a slotted wing arrangement (14) with a rear wing (16) which is displaceable into a rest position (RS) and an operative position (WS) and a fixed rear spoiler (15) lying underneath the rear wing (16), wherein the rear spoiler (15) - seen in a cross-section extending in the vehicle longitudinal direction (FL) - forms, together with an extension (23), a shell-shaped trough (24) which also extends along the vehicle width (FB) and which at least partly receives the rear wing (16) in the rest position (RS) thereof, **characterised in that** the rear panel part (6) has the extension (23), which extends below the air guiding device (11) in the direction of the transverse edge (13) of the tailgate (3), **in that** the extension (23) of the rear panel part (6) extends under the transverse edge (13) of the tailgate (3), **in that** the air guiding device (11) is connected to the rear transverse edge (13) of the tailgate (3), which transverse edge (13) extends in the vehicle transverse direction (FQ), and **in that** the rear spoiler (15) is formed as an elevation extending along the vehicle width (FB) on the rear panel part (6).

2. A motor vehicle according to claim 1, **characterised in that** the rear spoiler (15) is connected in a preferably transitionless manner to the base (25) of the trough (24) therebehind.

3. A motor vehicle according to claim 1 or 2, **characterised in that** - seen in longitudinal section - the base (25) of the trough (24) adjacent to the transverse edge (13) of the tailgate (3) at least partly lies underneath the transverse edge (13).

4. A motor vehicle according to any one of the preceding claims, **characterised in that** - seen in longitudinal section - the rear spoiler (15) projects beyond the transverse edge (13) of the tailgate (3).

5. A motor vehicle according to any one of the preceding claims, **characterised in that** a supporting structure (30) for the base (25) is arranged underneath the base (25) of the trough (24).

6. A motor vehicle according to claim 5, **characterised in that** the supporting structure (30) is arranged on an inner surface (37) of the rear panel part (6).

7. A motor vehicle according to claim 5 or 6, **characterised in that** the supporting structure (30) has a supporting shell (38) which - seen in longitudinal section - is adapted to the shape of the base (25).

8. A motor vehicle according to any one of the preceding claims 5 to 7, **characterised in that** the supporting structure (30) has at least one suspension tongue (46) which engages in a suspension eye (47) on the rear panel part (6).

9. A motor vehicle according to any one of the preceding claims 5 to 8, **characterised in that** the supporting structure (30) has at least one passage eye (49), through which an insertion tongue (48) of the rear panel part (6) passes, and **in that** the insertion tongue (48) has a fastening member (50) which holds the supporting structure (30) on the inner surface (37) of the rear panel part (6).

10. A motor vehicle according to claim 9, **characterised in that** the fastening member (50) is formed as a clip (51) which is attachable to the insertion tongue (48).

11. A motor vehicle according to any one of the preceding claims 5 to 10, **characterised in that** the supporting structure (30) is supported on the bodyshell (29) of the motor vehicle (1).

12. A motor vehicle according to any one of the preceding claims 5 to 11, **characterised in that** the supporting structure (30) has at least one supporting foot (39, 40, 41) which engages the bodyshell (29).

13. A motor vehicle according to claim 12, **characterised in that** the supporting foot (39, 40, 41) has a projection (43) which engages in a corresponding opening (44) in the bodyshell (29).

14. A motor vehicle according to any one of the preceding claims, **characterised in that** the rear panel part (6) is formed in one piece as a plastics part together with the edge strip (7), i.e. the trough (24) and the rear spoiler (15).

15. A motor vehicle according to any one of the preceding claims, **characterised in that** at least one passage opening (33) for a drive device (36) for the rear wing (16) is formed in the rear panel part (6), especially in an edge strip (7) and preferably in its trough (24).

16. A motor vehicle according to claim 15, **characterised in that** the passage opening (33) is provided with a collar (33').

17. A motor vehicle according to claim 1 or 3, **characterised in that** the trough (24) at least partly lies underneath an imaginary continuation (line 31) of the outer skin (32) of a body (2') of the motor vehicle (1).

## Revendications

1. Véhicule automobile (1) comprenant un hayon arrière (3), une partie d'habillage arrière (6) et un dispositif de guidage d'air (11) pouvant être déplacé au moyen d'un dispositif d'entraînement (36) à partir d'une position de repos (RS) rentrée dans une position active (WS) sortie et inversement, s'étendant sur la largeur du véhicule (FB), le dispositif de guidage d'air (11) étant divisé en deux parties sous la forme d'un agencement d'aile à fente (14) avec une aile arrière (16) pouvant être déplacée dans la position de repos (RS) et la position active (WS) et est équipé d'un spoiler arrière (15) fixe et disposé au-dessous de l'aile arrière (16), le spoiler arrière (15) formant, vu dans une section s'étendant dans le sens longitudinal du véhicule (FL), avec un prolongement (23) une cavité (24) en forme de coque, qui est agencée d'autre part sur la largeur du véhicule (FB) et qui reçoit au moins partiellement l'aile arrière (16) dans sa position de repos (RS), **caractérisé en ce que** la partie d'habillage arrière (6) présente sur le prolongement (23) qui s'étend au-dessous du dispositif de guidage d'air (11) en direction de l'arête transversale (13) du hayon arrière (3), **en ce que** le prolongement (23) de la partie d'habillage arrière (6) va jusque sous l'arête transversale (13) du hayon arrière (3), **en ce que** le dispositif de guidage d'air (11) se raccorde à l'arête transversale (13) arrière, s'étendant dans le sens transversal du véhicule (FQ), du hayon arrière (3), et **en ce que** le spoiler arrière (15) est réalisé sur la partie d'habillage arrière (6) sous la forme d'une élévation s'étendant sur la largeur du véhicule (FB).

2. Véhicule automobile selon la revendication 1, **caractérisé en ce que** le spoiler arrière (15) est raccordé de préférence sans transition, au fond (25) de la cavité (24) arrière.

3. Véhicule automobile selon la revendication 1 ou 2, **caractérisé en ce que**, vu en coupe longitudinale, le fond (25) de la cavité (24) est disposé à proximité de l'arête transversale (13) du hayon arrière (3) au moins par endroits au-dessous de l'arête transversale (13).

4. Véhicule automobile selon l'une quelconque des revendications précédentes, **caractérisé en ce que**, vu en coupe longitudinale, le spoiler arrière (15) dépasse de l'arête transversale (13) du hayon arrière (3).

5. Véhicule automobile selon l'une quelconque des revendications précédentes, **caractérisé en ce qu'**une structure de soutien (30) pour le fond (25) est disposée au-dessus du fond (25) de la cavité (24).

6. Véhicule automobile selon la revendication 5, **caractérisé en ce que** la structure de soutien (30) est disposée sur un côté intérieur (37) de la partie d'habillage arrière (6).

7. Véhicule automobile selon la revendication 5 ou 6, **caractérisé en ce que** la structure de soutien (30) présente une coque de soutien (38) qui, vue en coupe longitudinale, est adaptée au tracé du fond (25).

8. Véhicule automobile selon l'une quelconque des revendications 5 à 7 précédentes, **caractérisé en ce que** la structure de soutien (30) présente au moins une patte d'accrochage (46) qui s'engage dans un anneau d'accrochage (47) sur la partie d'habillage arrière (6).

9. Véhicule automobile selon l'une quelconque des revendications précédentes 5 à 8, **caractérisé en ce que** la structure de soutien (30) présente au moins un anneau de pénétration (49), qui est traversé par une patte d'emboîtement (48) de la partie d'habillage arrière (6) et **en ce que** la patte d'emboîtement (48) présente un élément de fixation (50) qui maintient la structure de soutien (30) sur le côté intérieur (37) de la partie d'habillage arrière (6).

10. Véhicule automobile selon la revendication 9, **caractérisé en ce que** l'élément de fixation (50) est réalisé sous la forme d'une pince (51) pouvant être posée sur la patte d'emboîtement (48).

11. Véhicule automobile selon l'une quelconque des revendications précédentes 5 à 10, **caractérisé en ce que** la structure de soutien (30) s'appuie sur la coque brute (29) du véhicule automobile (1).

12. Véhicule automobile selon l'une quelconque des revendications précédentes 5 à 11, **caractérisé en ce que** la structure de soutien (30) présente au moins un pied de support (39, 40, 41) qui s'applique sur la coque brute (29).

13. Véhicule automobile selon la revendication 12, **caractérisé en ce que** le pied de support (39, 40, 41) présente une saillie (43) qui s'engage dans un logement (44) approprié sur la coque brute (29).

14. Véhicule automobile selon l'une quelconque des revendications précédentes, **caractérisé en ce que** la partie d'habillage arrière (6) est réalisée d'une seule pièce comme partie plastique avec la bande périphérique (7), donc la cavité (24) et le spoiler arrière (15).

15. Véhicule automobile selon l'une quelconque des revendications précédentes, **caractérisé en ce qu'**au moins une ouverture de passage (33) pour un dispositif d'entraînement (36) destiné à l'aile arrière (16) est introduite dans la partie d'habillage arrière (6), en particulier dans une bande périphérique (7) et de préférence dans sa cavité (24).

16. Véhicule automobile selon la revendication 15, **caractérisé en ce que** l'ouverture de passage (33) est dotée d'un col (33').

17. Véhicule automobile selon la revendication 1 ou 3, **caractérisé en ce que** la cavité (24) est disposée au moins par section au-dessous d'un prolongement imaginaire (ligne 31) de l'enveloppe extérieure (32) d'une carrosserie (2') du véhicule automobile (1).
